# EUROPÄISCHE PATENTANMELDUNG

(11) **EP 3 981 545 A1**
(43) Veröffentlichungstag der Anmeldung: **13.04.2022**
(21) Anmeldenummer: 21195651.1
(22) Anmeldetag: 09.09.2021
(51) Int. Cl.: B23Q 7/14, B23Q 16/04, B65G 37/02

(54) **POSITIONIEREINHEIT FÜR EIN TRANSFERSYSTEM; TRANSFERSYSTEM**

(30) Priorität: 07.10.2020 DE 102020212672
(71) Anmelder: Robert Bosch GmbH, 70442 Stuttgart (DE)
(72) Erfinder: Ludwig, Peter, 72072 Tuebingen (DE); Buttau, Hans-Peter, 74348 Lauffen (DE); Kiebel, Markus, 70499 Stuttgart (DE)

(57) **Zusammenfassung**

Offenbart ist eine Positioniereinheit zum Positionieren eines Trägers an einem Transfersystem, mit Positionierabschnitten, mit denen der Träger zum Positionieren in gespannte Anlage bringbar ist, und von denen ein erster von einem, insbesondere elektrischen, Antrieb der Positioniereinheit in die gespannte Anlage betätigbar ist.

Offenbart ist zudem ein Transfersystem damit.

## Beschreibung

Die Erfindung betrifft eine Positioniereinheit für ein Transfersystem gemäß dem Oberbegriff des Patentanspruchs 1, sowie ein Transfersystem damit, gemäß Patentanspruch 15.

Mit Hilfe eines Transfersystems können Werkstücke von Station zu Station befördert werden. Eine bekannte Lösung stellt beispielsweise das Transfersystem "TS1" der Anmelderin dar. Als Fördermittel sind stetig umlaufende Gurte, Zahnriemen, Flachplattenketten oder Staurollenketten oder Rundriemen möglich. Auf diesen werden Werkstückträger, die die Werkstücke aufnehmen, über Reibung mitgenommen. An den Stationen können beispielsweise Bearbeitungen des Werkstücks erfolgen. Hierzu wird der Werkstückträger an den Stationen von einer auch als Vereinzeler bezeichneten Positioniereinheit angehalten, während das Fördermittel weiterläuft. Die Positioniereinheit klemmt hierzu den Werkstückträger zwischen zwei Positionierabschnitten, wobei einer der Positionierabschnitte pneumatisch in Anlage mit dem Werkstückträger betätigt wird und diesen gegen den zweiten Positionierabschnitt drückt. In der Haltephase bleibt der Aktor pneumatisch betätigt. Nach beendetem Arbeitsgang an der jeweiligen Station wird der Werkstückträger vom Vereinzeler/der Positioniereinheit für den Transport zur nächsten Station freigegeben.

Da die Installation und Wartung einer Pneumatik einen vergleichsweise hohen Aufwand darstellt, sind alternativ Positioniereinheiten mit elektrischen Aktoren zur Betätigung des Positionierabschnitts im Einsatz. Auch die elektrischen Aktoren sind dabei so gesteuert, dass sie den Positionierabschnitt initial in Anlage mit dem Werkstückträger bringen, die Haltekraft aufbringen und diese während des Aufenthalts des Werkstückträgers an der Station aufrechterhalten.

Nachteilig hieran sind die vergleichsweise hohe Belastung und der Energieverbrauch des elektrischen Aktors in der Haltephase, was die Gefahr einer Überhitzung und eines damit verbundenen Ausfalls birgt.

Dem gegenüber liegt der Erfindung die Aufgabe zu Grunde, eine Positioniereinheit für ein Transfersystem zu schaffen, das eine höhere Ausfallsicherheit aufweist. Hinzu kommt die Aufgabe, ein Transfersystem zu schaffen, das eine höhere Ausfallsicherheit aufweist.

Die erste Aufgabe wird gelöst durch eine Positioniereinheit mit den Merkmalen des Patentanspruchs 1, die zweite durch ein Transfersystem mit den Merkmalen des Patentanspruchs 15.

Vorteilhafte Weiterbildungen der Positioniereinheit sind in den Patentansprüchen 2 bis 14 beschrieben.

Eine Positioniereinheit zum Positionieren eines Trägers, insbesondere Werkstückträgers, an oder in einem Transfersystem hat Positionierabschnitte, mit denen der Träger zu seiner Positionierung in gespannte Anlage bringbar ist. Gespannte Anlage bedeutet, dass der Träger positioniert ist und eine Spannkraft von den Positionierabschnitten auf den Träger übertragen ist. Wenigstens einer, vorzugsweise nur einer, der Positionierabschnitte ist von einem Antrieb der Positioniereinheit in die gespannte Anlage betätigbar. Der Antrieb ist insbesondere elektrisch. Erfindungsgemäß ist eine, insbesondere mechanische, Einrichtung vorgesehen, über die der erste Positionierabschnitt in die gespannte Anlage abgestützt ist, sodass der Antrieb keine Betätigungs- oder Haltekraft aufbringen muss.

Die Positioniereinheit, und auch ein damit ausgeführtes Transfersystem, weist dann eine höhere Ausfallsicherheit bei gleichem oder geringerem Aufwand auf, da der Antrieb nur bis zum Erreichen der gespannten Anlage Arbeit verrichten muss und in der gespannten Anlage energielos, insbesondere stromlos schaltbar ist.

Vorzugsweise ist der Antrieb elektrisch, um einen gegenüber pneumatischen Lösungen geringeren Installationsaufwand zu erreichen.

Der Antrieb ist vorzugsweise ein Linearantrieb, insbesondere ein Elektromagnet mit beweglichem Anker sein, oder er ist ein Drehantrieb, insbesondere ein Motor oder Schrittmotor.

Ein zweiter der Positionierabschnitte ist vorrichtungstechnisch einfach fest und/oder unbetätigbar. Er dient somit nur als Gegenhalter oder Widerlager.

Der Schluss zwischen Träger und Positionierabschnitten ist vorzugsweise Formund/oder kraftschlüssig.

Der elektrische Antrieb ist entweder nur druckfest, bei Betätigung in Richtung der gespannten Anlage, mit dem ersten Positionierabschnitt gekoppelt, oder er ist ergänzend zugfest, bei Betätigung zurück in die Ausgangslage, mit dem ersten Positionierabschnitt gekoppelt.

Der erste Positionierabschnitt kann in die gespannte Anlage linear oder schwenkend oder rotierend betätigbar sein und ist dementsprechend gelagert.

In einer Weiterbildung ist ein Getriebe vorgesehen, über das der erste Positionierabschnitt mit dem Antrieb weggekoppelt ist. So kann eine Weg- und/oder Kraftübersetzung zur effizienten Steuerung der Positionierung vorgesehen sein.

Zu diesem Zweck ist eine Übersetzung des Getriebes wegabhängig, also über den Weg variabel.

In einer Weiterbildung ist eine Wegübersetzung des Getriebes in der gespannten Anlage null und/oder weist einen Vorzeichenwechsel auf, und/oder die Wegübersetzung ist außerhalb der gespannten Anlage größer null, und/oder die Wegübersetzung ist in einer zur gespannten Anlage distalen Ausgangslage des ersten Positionierabschnitts am größten. Insbesondere nimmt die Wegübersetzung von der Ausgangslage hin zur gespannten Anlage ab. In der Ausgangslage ist sie insbesondere größer null und kleiner eins, eins oder größer eins.

In einer Weiterbildung ist das Getriebe derart ausgestaltet, dass darüber ein Kraftfluss vom Antrieb zum ersten Positionierabschnitt wenigstens eine Umlenkung erfährt. Das ermöglicht die variable Anordnung des ersten Positionierabschnitts, des Antriebs und zwischenschaltbarere oder - geschalteter Koppelelemente wie, Stange, Feder, oder dergleichen.

In einer Weiterbildung hat das Getriebe wenigstens einen Hebel, über den ein antriebsseitiger Weg in einen mittelbaren oder unmittelbaren Betätigungsweg des ersten Positionierabschnitts umgelenkt und/oder übersetzt ist. Auch hier bietet sich die Möglichkeit der variablen, insbesondere zueinander angestellten, Anordnung und optimierten Bauraumausnutzung.

In einer Weiterbildung hat das Getriebe einen Kniehebel, dessen Knie mit dem Antrieb und dessen einer Schenkel mit dem ersten Positionierabschnitt weggekoppelt ist.

Als Einrichtung im Falle des Kniehebels hat die Positioniereinheit in einer Weiterbildung einen festen oder einstellbaren Anschlag für das Knie, an den dieses in einer Überstreckung des Knies in der gespannten Anlage des ersten Positionierabschnitts anschlägt. Mit der Überstreckung wirkt die Spannkraft nicht mehr auf den Antrieb, sondern wird vom Anschlag aufgenommen. Der Antrieb kann dann kraftlos geschaltet werden.

Ergänzend oder alternativ kann das Getriebe in einer Weiterbildung eine Kurvenscheibe haben, über die ein antriebsseitiger Weg in einen mittelbaren oder unmittelbaren Betätigungsweg des ersten Positionierabschnitts umgelenkt oder übersetzt ist. Dies ermöglicht insbesondere die Nutzung eines rotativen Antriebs.

Für die Wegkopplung ist der erste Positionierabschnitt mittelbar oder unmittelbar an einem Umfang, Rand oder einer Kurve der Kurvenscheibe abgestützt.

In einer Weiterbildung ist die Einrichtung von einem Abschnitt des Umfangs, Randes oder der Kurve gebildet, dessen Radius konstant ist, eine Steigung in Umfangsrichtung also null ist. Der daran mittelbar oder unmittelbar abgestützte erste Positionierabschnitt bewirkt somit an der Kurvenscheibe keine Umfangskraft und auch kein Drehmoment, sodass eine Selbsthemmung vorliegt und der Antrieb kraftlos schaltbar ist. Streng genommen könnte dieser Abschnitt eine geringe Steigung aufweisen, wobei die Funktion der Selbsthemmung noch erreicht wird, solange die Gleitpaarung und die Steigung derart sind, dass Haftreibung vorliegt, bis hin zur bereits erwähnten Steigung gleich null.

In einer Weiterbildung hat die Kurvenscheibe noch einen anderen Umfangsabschnitt, Randabschnitt oder Kurvenabschnitt, dessen Radius ein Minimum aufweist, wobei der minimale Radius ein globales oder lokales sein kann. So ist ein Abschnitt oder sogar eine "Mulde" gebildet, an dem oder der der erste Positionierabschnitt in einer zur gespannten Anlage distalen Ausgangslage mittelbar oder unmittelbar abgestützt ist. Somit ist auch die Ausgangslage eindeutig definiert.

Um die Spannkraft aufzubringen, bietet sich eine bevorzugte Weiterbildung an, in der eine gesonderte Spanneinrichtung, beispielsweise eine Druckfeder, Druckfederanordnung, Gasfeder oder dergleichen vorgesehen ist, von der der erste Positionierabschnitt in die gespannte Anlage spannbar oder gespannt ist.

In einer bevorzugten Weiterbildung ist die Spanneinrichtung nur entlang eines Betätigungsweges des ersten Positionierabschnitts mit dem Antrieb kraftgekoppelt, der mit einer ersten Anlage des ersten Positionierabschnitts am Werkstückträger beginnt und der mit der gespannten Anlage des ersten Positionierabschnitts am Werkstückträger endet. Ansonsten liegt keine Kraftkopplung vor, sodass der Antrieb kraftlos schaltbar ist.

Noch präziser definiert ist der letztgenannte Betätigungsweg, wenn er mit der ersten Anlage beider oder aller Positionierabschnitte am Werkstückträger an beginnt.

In allen genannten Fällen liegt in einer Weiterbildung entlang des Betätigungsweges aufgrund des Getriebes eine minimale Weg- und maximale Kraftübersetzung vor.

In einer Weiterbildung ist ein mit dem Knie verbundener Schenkel des Kniehebels mit der Spanneinrichtung entlang des Betätigungsweges zumindest kraftgekoppelt, und ansonsten nicht.

Die Spanneinrichtung hat vorzugsweise eine Vorspannung, sodass bei einsetzender Kraftkopplung mit dem Antrieb ein geringer Weg ausreicht, die hohe Spannkraft zu erreichen. Dies ist vorteilhaft, da so insbesondere der letztgenannte Vorteil der minimalen Weg- und maximale Kraftübersetzung im Bereich kurz vor Erreichen der gespannten Anlage ausgenutzt werden kann. Ein Verhältnis aus Vorspannkraft zu Spannkraft in gespannter Anlage ist etwa 0,9 bis 0,98, vorzugsweise im Bereich um 0,95.

Die Vorspannkraft ist vorzugsweise so hoch gewählt, dass sie unter Berücksichtigung der Breitentoleranzen des Werkstückträgers und der Positionierabschnitte sicher überwunden werden kann, und nicht niedriger. In einer Weiterbildung ist oder sind daher die Vorspannkraft der Spanneinrichtung und/oder deren Federrate auf Toleranzen des Trägers und der Positionierabschnitte und eine Nenn-Antriebskraft abgestimmt. Durch die Vorspannung der Feder wird eine annähernd gleiche Spannkraft an den Werkstückträger abgegeben, unabhängig von Toleranzen des Werkstückträgers und der Positionierabschnitte.

Auf individuelle Bauraumbedingungen kann reagiert werden, wenn in einer Weiterbildung die Spanneinrichtung fluchtend mit oder parallel oder angestellt zu dem ersten Positionierabschnitt angeordnet ist. Die flexible Anordnung ist dabei über eine Kopplung über Hebel oder dergleichen möglich.

So kann die Spanneinrichtung beispielsweise im direkten oder kürzesten Kraftflusspfad, der sich vom Antrieb hin zum ersten Positionierabschnitt erstreckt, angeordnet sein. Hier wird Bauraum entlang dem Kraftflusspfad länger oder breiter, je nach Bauweise. Oder die Spanneinrichtung ist in einem Abzweig des kürzesten Kraftflusspfades angeordnet. So ist eine Anordnung der Spanneinrichtung möglich, die Vorteile bei der Bauraumausnutzung und Zugänglichkeit mit sich bringen kann.

In einer Weiterbildung ist der erste Positionierabschnitt in seine Ausgangslage, mit vergleichsweise geringer Rückstellkraft, vorgespannt. Seine Rückstellung aus der gespannten Anlage in die Ausgangslage ist so vereinfacht und es kann sogar auf eine zugfeste Kopplung mit dem Antrieb verzichtet werden.

In einer Weiterbildung ist der erste Positionierabschnitt druckfest und zugfest mit dem Antrieb gekoppelt. Dies ist insbesondere in der Weiterbildung mit dem überstreckten Knie vorteilhaft, da der Antrieb das Knie beim Auflösen der gespannten Anlage hin zur Ausgangslage aus seiner Überstreckung rückziehen kann.

In einer Weiterbildung weist die Positioniereinheit den Träger auf, der zwischen den Positionierabschnitten angeordnet ist.

In einer Weiterbildung hat die Positioniereinheit eine Brücke zum Unter- oder Überspannen einer Streckenführung des Transfersystems, mit einander gegenüberliegenden Backen oder Tragabschnitten, die jeweils an einer Seite der Streckenführung befestigbar sind, wobei der erste Positionierabschnitt an einem ersten der Backen betätigbar gelagert ist und der zweite Positionierabschnitt am, zweiten Backen angeordnet ist. Er kann dort fest oder beweglich gelagert oder angeordnet sein. Die Brücke ist derart dimensioniert, dass sie die Spannkraft ohne nennenswerte Verformung aufnehmen kann, sodass die Streckenführung keine Verformung erfährt.

In einer bevorzugten Weiterbildung ist der zweite Positionierabschnitt am zweiten Backen in Transferrichtung schwimmend gelagert.

Vorzugsweise ist der so gelagerte zweite Positionierabschnitt in Transferrichtung federzentriert angeordnet.

Über die schwimmende Lagerung ist gewährleistet, dass sich der zweite Positionierabschnitt in Transferrichtung beim Spannen, wenn also der erste Positionierabschnitt mit zentrierender Wirkung an den Werkstückträger gespannt wird, in Transferrichtung bewegen kann. So sind dysfunktionale Scherkräfte beim Spannen verhindert. Die Federzentrierung sorgt für eine Neutral- oder Mittenstellung des Werkstückträgers in Transferrichtung.

Ein Transfersystem hat eine Streckenführung und einen daran geführten Träger, sowie eine an der Streckenführung angeordnete Positioniereinheit, die gemäß wenigstens einem Aspekt der vorhergehenden Beschreibung ausgestaltet ist. Wie oben dargelegt, weist das Transfersystem aufgrund der Merkmale der Positioniereinheit eine höhere Ausfallsicherheit auf.

In einer Weiterbildung mit der Brücke und den Backen sind die Backen jeweils an einer Seite der Streckenführung befestigt und diese ist von der Brücke unterspannt.

Im Folgenden werden zwei Ausführungsbeispiele einer erfindungsgemäßen Positioniereinheit, sowie ein Ausführungsbeispiel eines Transfersystems damit, in Zeichnungen näher erläutert. Es zeigen:
Figur 1 ein Transfersystem gemäß einem Ausführungsbeispiel in einer perspektivischen Ansicht,
Figur 2 eine Positioniereinheit des Transfersystems gemäß Figur 1, gemäß einem ersten Ausführungsbeispiel, in perspektivischer Ansicht,
Figur 3 die Positioniereinheit gemäß Figur 2 in einem Querschnitt, in einer Ausgangslage,
Figur 4 die Positioniereinheit gemäß Figur 3 in gespannter Anlage mit einem Werkstückträger,
Figuren 5 eine Positioniereinheit für das Transfersystem gemäß Figur1, gemäß einem zweiten Ausführungsbeispiel, in perspektivischer Ansicht,
Figur 6 die Positioniereinheit gemäß Figur 5 in einem Querschnitt, in einer Ausgangslage,
Figur 7 die Positioniereinheit gemäß Figur 6 in gespannter Anlage mit einem Werkstückträger,
Figur 8 einen Backen mit daran schwimmend gelagertem Positionierabschnitt, gemäß beiden Ausführungsbeispielen, in perspektivischer Ansicht,
Figur 9 den Backen gemäß Figur 8 in einer Ansicht in Transferrichtung, und
Figur 10 den Backen gemäß Figur 8 und 9 in einem in Transferrichtung aufgespannten Längsschnitt.

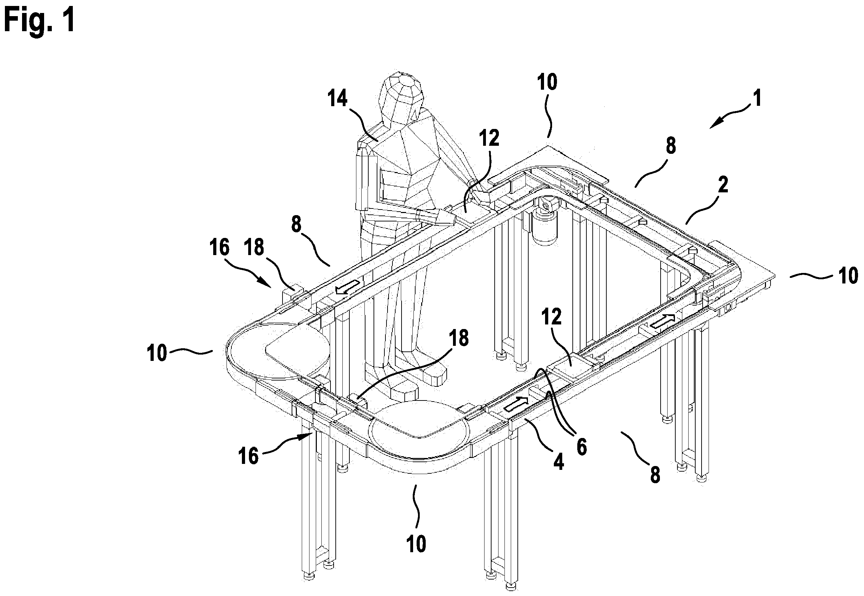

Gemäß Figur 1 hat ein Transfersystem 1 eine Streckenführung 2, die im gezeigten Ausführungsbeispiel geschlossen oder ringförmig ausgestaltet ist. Alternativ sind selbstverständlich offene, geradlinige und/oder kurvenförmige Verläufe der Streckenführung 2 möglich. Die Streckenführung 2 weist zwei zueinander parallel verlaufende Führungsprofile oder Schienen 4 auf, an denen jeweils ein band-, kettenoder gliedförmiges Fördermittel 6 umläuft. Dabei hat das Transfersystem 1 aufgrund seiner geschlossenen Bauweise vier lineare Streckenabschnitte 8 und vier gekrümmte oder kreissegmentförmige Abschnitte 10. Die beiden in Figur 1 linken Abschnitte 10 sind dabei als Drehscheiben ausgestaltet.

Vom Fördermittel 6 werden Werkstückträger 12 auf dem Transfersystem 1 mittels Reibkraft mitgenommen. Dabei werden die Werkstückträger 12 im gezeigten Ausführungsbeispiel von Bedienpersonal 14 mit den Werkstücken bestückt, wobei auch automatisierte Bestückungen möglich sind.

Der so mitgenommene Werkstückträger 12, mit darauf angeordnetem Werkstück (nicht dargestellt) wird an Stationen 16 von sogenannten Vereinzelern oder Positioniereinheiten 18 angehalten. An den Stationen 16 erfolgt dann eine Bearbeitung oder eine sonstige Manipulierung des Werkstücks. Dazu fixieren die Positioniereinheiten 18 den Werkstückträger 12 in definierter Position.

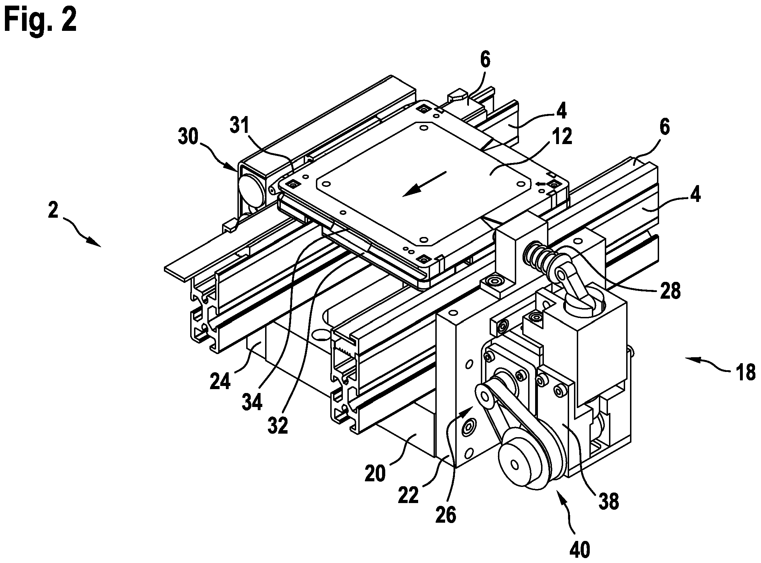

Figur 2 zeigt ein erstes Ausführungsbeispiel einer derartigen Positioniereinheit 18, wie sie beispielswiese in Figur 1 am linken geradlinigen Streckenabschnitt 8 angeordnet ist. Zu erkennen sind die Führungsprofile 4, an denen jeweils das im Ausführungsbeispiel riemenförmige Fördermittel 6 umläuft. Auf den Fördermitteln 6 ist der im Ausführungsbeispiel quadratische Werkstückträger 12 angeordnet. Die Positioniereinheit 18 hat eine die Streckenführung 2 unterspannende Brücke 20, an der lateral außen der Führungsschienen 4 je ein Backen 22, 24 angeordnet ist. Die Positioniereinheit 18, mit ihrer Brücke 20 und den Backen 22, 24 ist fest an den Führungsprofilen 4 der Streckenführung 2 befestigt.

Am ersten Backen 22 ist ein rotatorischer Antrieb 26 angeflanscht, von dem über ein Getriebe 44, 60 ein erster Positionierabschnitt 28, der im gezeigten Ausführungsbeispiel als linear geführter Bolzen ausgestaltet ist, betätigbar ist. Über den ersten Positionierabschnitt 28 erfolgt eine Höhenzentrierung des Werkstückträgers 12 auf der Seite des ersten Backens 22, sowie eine Längszentrierung des Werkstückträgers 12 in Transferrichtung. Gegenüber dem ersten Positionierabschnitt 28, lateral außen der äußeren Führungsschiene 4 und am dortigen zweiten Backen 24, ist der mit dem ersten Positionierabschnitt 28 zusammenwirkende, gegenhaltende zweite Positionierabschnitt 30 angeordnet.

Der Werkstückträger 12 ist plattenförmig ausgestaltet und hat seitens des zweiten Positionierabschnitts 30 eine Zentriernut 34, die in Figur 2 auch an einer in Bewegungsrichtung (Pfeil) weisenden Stirnseite 32 ausgebildet ist. Der zweite Positionierabschnitt 30 hat ein auf die Zentriernut 34 abgestimmtes, etwa stangenförmig ausgebildetes Zentrierelement 31. Über dieses erfolgt in den gezeigten Ausführungsbeispielen eine Höhenzentrierung des Werkstückträgers 12 auf der Seite des zweiten Backens 24.

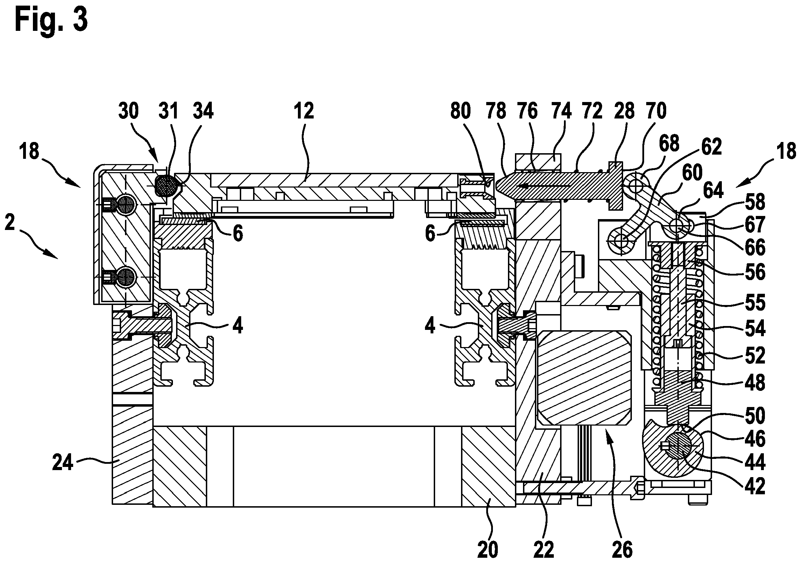

Figur 3 zeigt die Positioniereinheit 16 gemäß Figur 2 in einem Querschnitt der Streckenführung 2, also quer zur Transferrichtung (Pfeil in Figur 2). Die Backen 22, 24 sind über Schraubverbindungen 36 mit Gleitstein an einer Nut der Führungsschiene 4 befestigt. Die Positioniereinheit 18 hat eine Trag- und Gehäusestruktur 38 gemäß Figur 2, die wiederum am Backen 22 befestigt ist. Die Trag- und Gehäusestruktur 38 nimmt gemäß den Figuren 2 und 3 den Antrieb 26 auf. Dieser ist gemäß Figur 2 über einen Riementrieb 40 mit einer Getriebewelle 42 gemäß Figur 3 drehmomentgekoppelt.

Auf der Getriebewelle 42 ist über eine Nut-Federverbindung eine Kurvenscheibe 44 mit variablem Radius r als Getriebeelement befestigt. An deren Umfang 46 ist ein stufenzylinderförmiges Gleitstück 48 mit seiner Stirnseite 50 abgestützt.

Eine Druckfeder 52 ist zwischen zwei Tellerhülsen 54, 56 eingespannt. Eine Vorspannung ist dabei über eine Spannschraube 55 einstellbar, über die beide Tellerhülsen 54, 56 entgegen der Federkraft zugfest verbunden sind.

Eine 54 der beiden 54, 56 sitzt an einer Rückseite des Gleitstücks 48 auf, die andere 56 ist mit einem Federkopf 58 gekoppelt.

Der Federkopf 58 ist über einen T-förmigen Kipphebel 60 mit dem ersten Positionierabschnitt 28 druckfest - aber nicht zugfest - gekoppelt.

Der Kipphebel 60 ist mit seinem T-Mittelbalken 62 schwenkbar gelagert. Sein einer Querschenkel 64 ist schwimmend am Federkopf 58 gelagert. Im Ausführungsbeispiel erfolgt diese Lagerung mittels einem in einem Langloch 67 geführten Zentrierstiftes 66 des Querschenkels 64.

Sein anderer Querschenkel 68 ist gleitend an einer Gleitfläche 70 des ersten Positionierabschnitts 28 abgestützt. Dieser ist entgegen seiner Betätigungsrichtung (Pfeil Figur 3) über eine Rückstellfeder 72 an einer backenfesten Führung 74 abgestützt.

In der Führung 74 ist der erste Positionierabschnitt 28 mittels einer Gleithülse 76 gleitend und axialverschieblich gelagert.

Der erste Positionierabschnitt 28 ist als Bolzen ausgestaltet und durchsetzt die Führung 74 in Richtung hin zum Werkstückträger 12. Ein zum Werkstückträger 12 weisender erster Zentrierabschnitt 78 des Bolzens ist kegelförmig ausgestaltet und weist im Werkstückträger 12 ein passendes Gegenstück als kegelförmige Zentrieraufnahme 80 auf.

Einerseits die Positioniernut 34, zusammen mit dem stangenförmigen Zentrierelement 31 und dem zweiten Positionierabschnitt 30, sowie andererseits die Zentrieraufnahme 80, zusammen mit dem ersten Zentrierabschnitt 78 des ersten Positionierabschnitts 28, bilden eine Linienauflage einerseits und eine Punktauflage andererseits. Dadurch ist der Werkstückträger 12 bei Betätigung des ersten Positionierabschnitts 28 vollständig bestimmt an der Streckenführung 2 positionierbar.

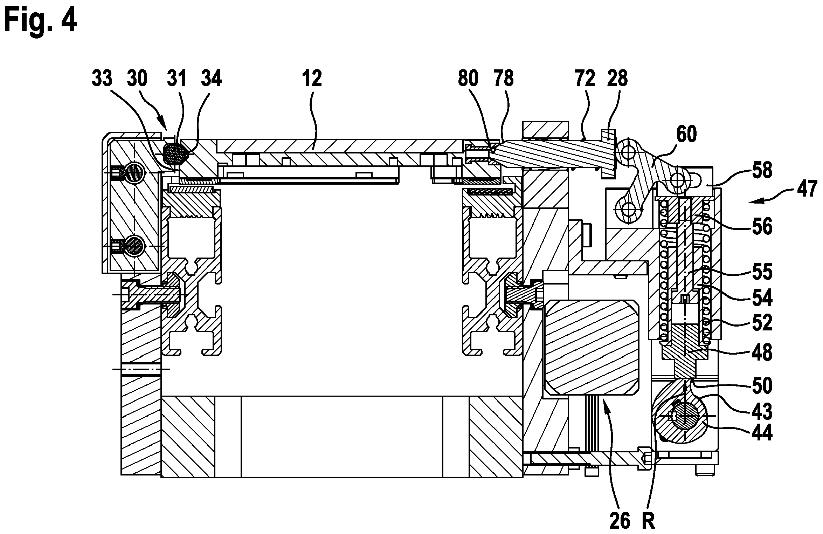

Figur 3 zeigt die Ausgangslage vor der Positionierung, Figur 4 die Endlage bzw. Positionierung. Anhand der Figuren 3 und 4 wird der Positioniervorgang erläutert. Aus Gründen der Übersichtlichkeit wird in Figur 4 auf die erneute Darstellung für die Beschreibung nicht notwendiger Bezugszeichen verzichtet.

Gemäß Figur 3 befindet sich die Kurvenscheibe in ihrer Ausgangslage, wobei der Schrittmotor des Antriebs 26 ebenso in seiner Ausgangslage angesteuert ist. Somit liegt das Gleitstück 48 an einem Umfangsbereich der Kurvenscheibe 44 an, der den kleinsten oder minimalen Radius r aufweist. In Folge ist der Weg oder Hub des Gleitstücks 48 minimal, weshalb auch der Hub des Federkopfes 58 minimal ist. In Folge ist der Kipphebel 60 im maximal vom Werkstückträger weggekippt und der erste Positionierabschnitt 28 ist über die Rückstellfeder 72 in seine Ausgangslage gemäß Figur 3 gespannt. Die Feder 52 der Spanneinrichtung 47 ist mittels der Spannschraube 55 der Spanneinrichtung 47 vorgespannt, beispielsweise auf 200-300N. Der Werkstückträger 12 liegt auf den Fördermitteln 6 auf.

Der Schrittmotor des Antrieb 26 wird nun schrittweise betätigt, wodurch die Kurvenscheibe 44 gemäß Figuren 3, 4 entgegen dem Urzeigersinn rotiert wird. In dieser Richtung steigt der Radius r stetig an, wodurch das Gleitstück 48 angehoben wird und mittels der Kopplung der Spanneinrichtung 48, 52, 54, 55, 56 mit dem Kipphebel 60 der erste Positionierabschnitt 28 entgegen der Rückstellfeder eingerückt wird. Dabei wird die Geschwindigkeit des Einrückens alleine über den Radiusverlauf in Abhängigkeit von der Drehposition der Kurvenscheibe 44 gesteuert - eine konstante Drehgeschwindigkeit oder Schrittgeschwindigkeit des Antriebs 26 vorausgesetzt. Kommen die Zentrierabschnitt-Paare 31, 34 und 78, 80 in jeweiligen Eingriff, beginnt aufgrund von deren Zentrierwirkung ein Abheben des Werkstückträgers 12 von den Fördermitteln 6.

Gegen Ende der Positionierung, wenn die "steifen" Positionierabschnitte 28, 30 mit ihren entsprechend "steifen" Gegenstücken, der Zentrieraufnahme 80 einerseits und der Randseite 33 des Werkstückträgers 12 andererseits in Anlage sind, sinkt der Weg des ersten Positionierabschnitts 28 aufgrund dieser Steifigkeit auf null.

Der Antrieb 26 und damit die Kurvenscheibe 44 drehen jedoch noch weiter, wobei der Radius noch weiter ansteigt. Damit hat auch das Gleitstück 48 immer noch einen Hub. Mit dem Moment der zuletzt beschriebenen Anlage wird somit eine Spannkraft wirksam, die vom Komprimierungsweg der Spanneinrichtung 47 abhängt. Die Spannkraft wird vom Kipphebel 60 auf den ersten Positionierabschnitt 28 übersetzt, der die Resultierende auf den Werkstückträger 12 überträgt, welcher dann wiederum am zweiten Positionierabschnitt 30 abgestützt ist.

Die Vorspannung der Feder 55 der Spanneinrichtung 47 ist unabhängig vom Ausführungsbeispiel vorzugsweise so gewählt, dass sie vom Antrieb 26, unter

Berücksichtigung einer jeweiligen Breitentoleranz des Werkstückträgers 12 und der Positionierabschnitte 28, 30 zueinander, sicher überwunden werden kann. Vorzugsweise ist sie nicht niedriger. So ist es möglich, dass der Antrieb 26 über 80% - 95% seines (Dreh-) Weges im Wesentlichen lastfrei arbeitet und schnell verfahren kann.

Nur auf den letzten 5% -20% des Weges, während dem die Übersetzung des Getriebes sehr klein ist, arbeitet der Antrieb 26 unter Last, wobei die Spannkraft dann etwa 70% - 95% einer Nenn-Spannkraft in. Dies gilt unabhängig vom Ausführungsbeispiel.

Die Spannkraft bleibt konstant, wenn gemäß Figur 4 die Kurvenscheibe 44 eine Position aufweist, in der sie mit dem Umfangsabschnitt mit konstantem und maximalem Radius R am Gleitstück 48 anliegt. Der Umfangsabschnitt überstreicht etwa 10°.

Aufgrund der Null-Radiusänderung an diesem Umfangsabschnitt bewirkt die Spannkraft an der Kurvenscheibe 44 keine Kraft in Umfangsrichtung, sondern allein in Radialrichtung. Es wirkt somit in der gespannten Anlage des ersten Positionierabschnitts 28 kein Drehmoment an der Getriebewelle 42, dem der Schrittmotor des Antrieb 26 gegenhalten müsste.

In anderen Worten ist über den Umfangsabschnitt der Kurvenscheibe mit konstantem maximalem Radius R eine Einrichtung geschaffen, über die der erste Positionierabschnitt vom Antrieb 26 unbetätigt in die gespannte Anlage abgestützt ist. Der Antrieb kann so unbestromt bleiben und eine Überlastung ist verhindert und sein Energieverbrauch verringert.

Der Werkstückträger 12 wird freigegeben, indem der Antrieb die Kurvenscheibe 44 im Uhrzeigersinn betätigt.

Eine gesicherte und vom Antrieb 26 unbetätigte Ausgangslage, die distal zur gespannten Anlage ist, nimmt der erste Positionierabschnitt 28 ein, wenn das Gleitstück 48 in einer Mulde 43 am Umfang der Kurvenscheibe 44 abgestützt ist. Diese befindet sich umfänglich benachbart zu dem Umfangsabschnitt mit maximalem Radius R.

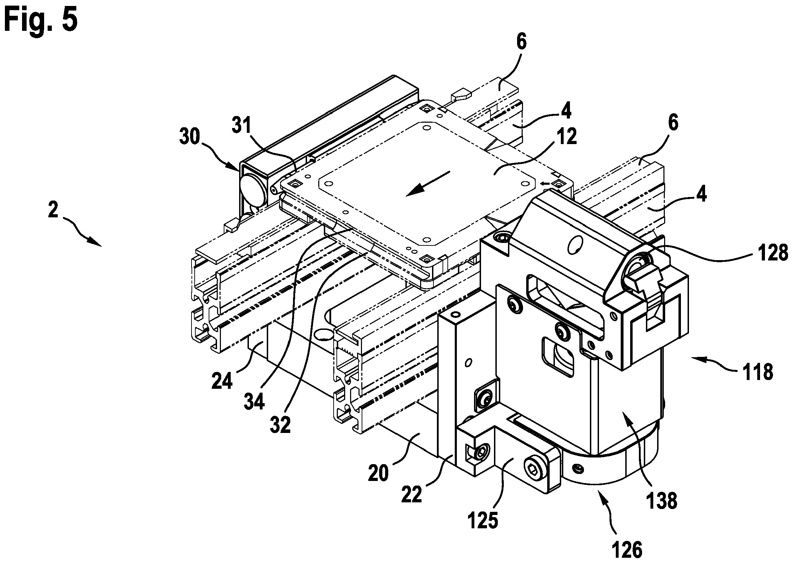

Figur 5 zeigt ein zweites Ausführungsbeispiel einer Positioniereinheit 118. Dabei soll sich die folgende Beschreibung, soweit möglich, auf die Abweichungen zum ersten Ausführungsbespiel beschränken. Komponenten mit über die Ausführungsbeispiele gleicher Ausgestaltung behalten ihre Bezugszeichen bei.

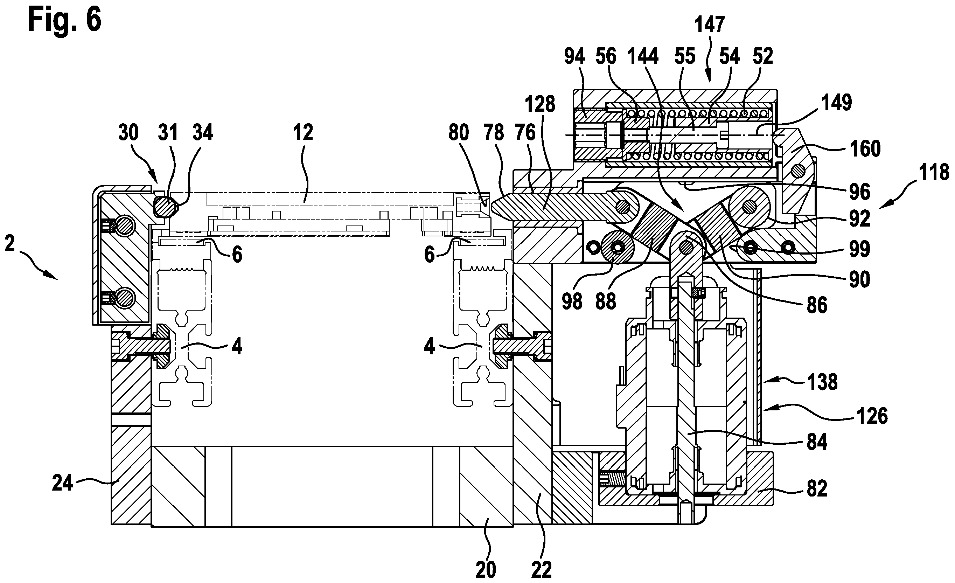

Gemäß Figur 5 weicht die Positioniereinheit 118 vom ersten Ausführungsbeispiel gemäß den Figuren 2 bis 4 zumindest die Komponenten Antrieb 126, Trag- und Gehäusestruktur 138 und erster Positionierabschnitt 128 ab. Der Antrieb 126 ist als elektromagnetischer Linearantrieb ausgestaltet und über ein Schwenklager 125, um eine Achse normal zur seiner Linearachse schwenkbar, gelagert. Zum Ausgleich von Toleranzen und zur Vermeidung von Querkräften ist er entlang der genannten Achse schwimmend gelagert. Weitere Unterschiede gehen aus dem Querschnitt gemäß Figur 6 hervor, der die Positioniereinheit 118 in der sogenannten Ausgangslage zeigt.

Figur 6 zeigt den Querschnitt der Positioniereinheit 118 in Analogie zum Querschnitt der Positioniereinheit 18 des ersten Ausführungsbeispiels gemäß Figur 3. Der guten Ordnung halber ist zu bemerken, dass der Werkstückträger 12 in Figur 6 schon in seiner abgehobenen Position dargestellt ist, obwohl die Positionierabschnitte 28, 30 in der Ausgangslage, wie dargestellt, noch nicht in Anlage mit dem Werkstückträger 12 sind.

Gemäß Figur 6 ist der elektromagnetische Linearantrieb 126 mit einem axialen Endabschnitt in einer am Schwenklager 125 gemäß Figur 5 schwenkbar gelagerten, topfförmigen Aufnahme 82 aufgenommen. Der Linearantrieb 126 hat einen Stößel oder Anker 84, der bei Bestromung axial betätigt wird. Gegen Beschädigung ist der Linearantrieb 126 durch einen Gehäuseabschnitt der Trag- und Gehäusestruktur 138 geschützt. Am der Aufnahme 82 gegenüberliegenden Endabschnitt ist der Stößel 84 mit einem Knie 86 eines als Kniehebel ausgebildeten Getriebes 144 weggekoppelt. Der Kniehebel 144 hat einen am Knie 86 drehgelagerten Schenkel 88, der mit seinem distalen Endabschnitt mit dem ersten Positionierabschnitt 128 drehgelenkig verbunden ist. Ein anderer am Knie 86 drehgelagerter Schenkel 90 weist vom Knie etwa gespiegelt zum einen Schenkel 88 weg. Sein distaler Endabschnitt 92 ist in der Ausgangslage außer Anlage, wie auch der erste Positionierabschnitt 128.

Vorgesehen ist des Weiteren eine Spanneinrichtung 147, die bezüglich Feder 52, Spannschraube 55 und Tellerhülsen 54, 56 dem ersten Ausführungsbeispiel entspricht. Abweichend ist die Spanneinrichtung 147 nicht direkt im Kraftfluss vom Antrieb 126 hin zum ersten Positionierabschnitt 128, sondern abseits davon angeordnet. Und zwar mit ihrer Federlängsachse 149 parallel zur Betätigungsachse des ersten Positionierabschnitts 128, wobei die Spanneinrichtung 147 etwa die gleiche axiale Länge überdeckt wie der Kniehebel 144. Zur Umlenkung der Spannkraft der Spanneinrichtung 147 auf den Kniehebel 144 ist ein wippend gelagerter Hebel 160 vorgesehen, dessen einer Endabschnitt zur Anlage an der Tellerhülse 54 und dessen anderer Endabschnitt zur Anlage am Endabschnitt 92 des Kniehebels 144 vorgesehen ist. Die Tellerhülse 56 ist an einer Anschlagschraube 96 abgestützt. An dieser kann von außen leicht zugänglich die Vorspannung - ergänzend zur Spannschraube 55 - eingestellt werden. In Betätigungsrichtung des Stößels 84 oberhalb des Kniehebels 144 ist eine einstellbare Anschlagschraube 96 für das Knie 86 vorgesehen. Die Schenkel 88, 90 sind an ihrer Unterseite gehäuseseitig an Rollen 98, 99 und/oder einer Führungskulisse abgestützt.

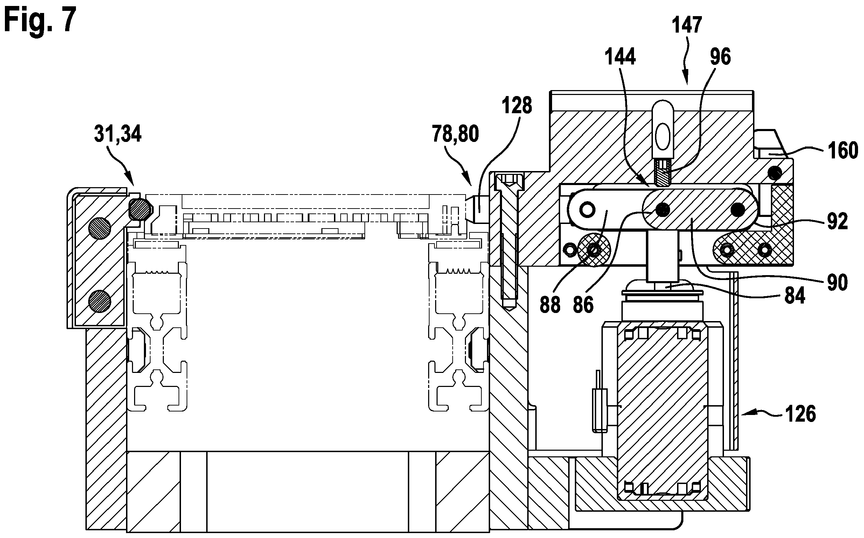

Aus Gründen der Übersichtlichkeit wird in Figur 7 auf die erneute Darstellung für die Beschreibung nicht notwendiger Bezugszeichen verzichtet.

Gemäß Figur 6 befindet sich die Positioniereinheit 118 in ihrer Ausgangslage, der Linearmotor ist unbestromt, der Hub des Stößels null, der Kniehebel 144 in Folge angewinkelt und der erste Positionierabschnitt 128 außer Anlage. Zudem ist der Kniehebel nicht in Anlage mit dem Hebel 160 sodass die auf 200-300N vorgespannte Spanneinrichtung 147 unwirksam geschaltet ist. Der Werkstückträger 12 liegt noch auf den Fördermitteln 6 auf.

Der Linearmotor 126 wird nun bestromt. Der Stößel 84 macht aufgrund der noch fehlenden Spann- oder Gegenkraft einen schnellen, im Prinzip kraftlosen Weg. Die Spannkraft wird erst wirksam, wenn der erste Positionierabschnitt 128 in Anlage mit dem Werkstückträger 12, der Endabschnitt 92 in Anlage mit dem Hebel 160 und letztgenannter in Anlage mit der Tellerhülse 54 ist. Dieser Moment ist konstruktiv und einstellungsbedingt kurz vor der kompletten Streckung des Kniehebels 144 sichergestellt. Bei Streckung ist die Wegübersetzung des Kniehebels null aber die Kraftübersetzung maximal, in der gebeugten Ausgangslage gemäß Figur 6 ist dies umgekehrt.

Kommen die Zentrierabschnitt-Paare 31, 34 und 78, 80 in jeweiligen Eingriff, beginnt aufgrund von deren Zentrierwirkung ein Abheben des Werkstückträgers 12 von den Fördermitteln 6.

Gegen Ende der Positionierung, wenn die "steifen" Positionierabschnitte 28, 30 mit ihren entsprechend "steifen" Gegenstücken, der Zentrieraufnahme 80 einerseits und der Randseite 33 des Werkstückträgers 12 andererseits in Anlage sind, ist der Weg des ersten Positionierabschnitts 128 aufgrund der Streckung des Kniehebels null. Allerdings wird das Knie durch einen minimalen Überhub des Stößels 84 minimal überstreckt und gerät gemäß Figur 7 in Anlage mit der Anschlagschraube 96. Ist dieser Punkt erreicht, kann der Linearantrieb 126 unbestromt/unbetätigt geschaltet werden. Die Spannkraft der Spanneinrichtung 147 wird somit nicht über den Linearantrieb 126, sondern über die Anschlagschraube 96 aufrechterhalten, was zu den gleichen bereits genannten Vorteilen auch für den Antrieb 126 führt.

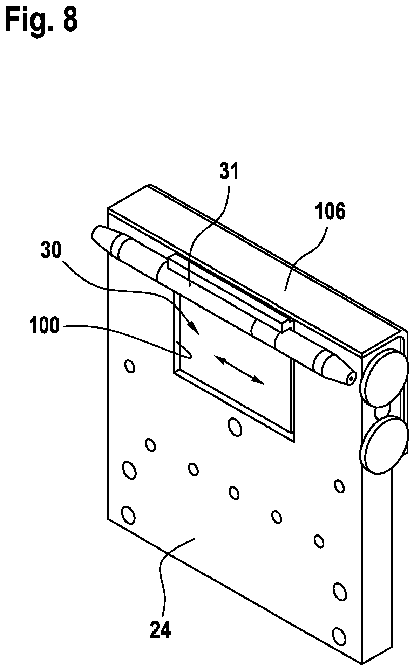

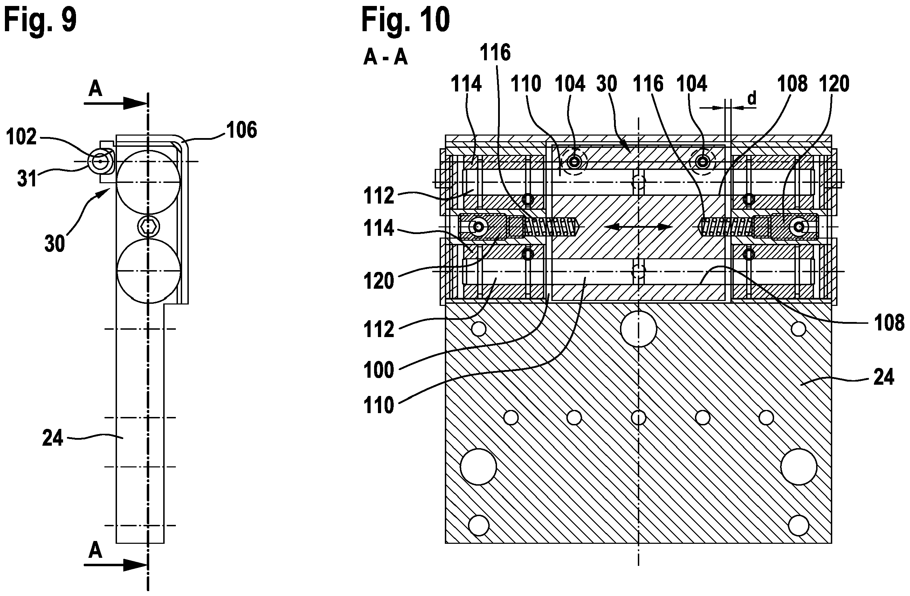

Figur 8 zeigt den in beiden Ausführungsbeispielen verbauten, zweiten Backen 24 mit dem zweiten Positionierabschnitt 30 und dessen Zentrierelement 31. Die perspektivische und vom Rest der Positioniereinheit freigestellte Ansicht zeigt, dass der zweite Positionierabschnitt 30 als im Wesentlichen quaderförmiges Element ausgebildet und in einer auf ihn abgestimmten Aussparung 100 des zweiten Backens 24 in Transferrichtung (Doppelpfeil) mit Spiel (d, vgl. Fig. 10) schwimmend gelagert ist.

Figur 9 zeigt den zweiten Backen 24 gemäß Figur 8 in einer Ansicht in Transferrichtung. Dabei kragt am oberen Endabschnitt des zweiten Positionierabschnitts 30 eine zum Werkstückträger 12 hin offene Aufnahme 102 aus, in die das stangenförmige zweite Zentrierelement 31 eingesetzt und über zwei rückwärtige Schrauben 104 (vgl. Fig. 10) befestigt ist. Der zweite Positionierabschnitt 30 und sein zweites Zentrierelement 31 bilden so eine feste Einheit aus. Alternativ können sie einstückig ausgebildet sein. Lateral außen ist ein Abdeckblech 106 vorgesehen, das den Positionierabschnitt 30 und die Aussparung 100 nach oben und lateral außen abdeckt.

Figur 10 zeigt den zweiten Backen 24 mit dem zweiten Positionierabschnitt 30 gemäß Figur 8 und 9 in einem von der Transferrichtung aufgespannten Längsschnitt, in einer Blickrichtung von innen nach lateral außen. Der im Wesentlichen quaderförmige Abschnitt des zweiten Positionierabschnitts 30 ist in Transferrichtung von zwei zylindrischen Durchgangsbohrungen 108 durchsetzt, die jeweils von einer zylindrischen Führungsstange 110 durchgriffen sind, welche jeweils mittels einer Madenschraube lagesicher in den Durchgangsbohrungen 108 festgelegt sind.

Die Führungsstangen 110 ragen beidseitig mit freien Endabschnitten 112 heraus. Diese sind jeweils in einem backenfesten, in den Ausführungsbeispielen als Kugel-Buchse ausgeführten, Lager 114 axial beweglich, schwimmend gelagert. Für die in Figur 10 dargestellte Mitten- oder Neutralstellung ist der zweite Positionierabschnitt 30 zwischen beidseitig angeordneten Zentrierfedern 116 eingespannt, wobei die Federspannung, und damit die Mittenstellung, über beidseitig vorgesehene Stellschrauben 120 einstellbar ist.

Durch die vorgenannte schwimmende Lagerung wird beim Spannen des Werkstückträgers 12 - wie dies beispielsweise anhand Figur 3 und 4 beschrieben ist - die Bewegung des zweiten Positionierabschnitts 30 und dessen zweiten Zentrierabschnitts 31 in Transferrichtung (Doppelpfeil) ermöglicht. Somit ist auch der Werkstückträger 12 beim Spannen schwimmend gelagert, bis schließlich der erste Zentrierabschnitt 78 mit der ersten Zentrieraufnahme 80 unter voller Spannkraft in Formschluss ist. Dann ist der Werkstückträger 12 - idealisiert betrachtet - über einen Linienkontakt seitens des zweiten Zentrierelements 31 und einen (idealisierten) Punktkontakt seitens des ersten Zentrierabschnitts 78 eindeutig bestimmt fixiert.

Offenbart ist eine Positioniereinheit zum Positionieren eines Trägers an einem Transfersystem, mit Positionierabschnitten, mit denen der Träger zum Positionieren in gespannte Anlage bringbar ist, und von denen ein erster von einem, insbesondere elektrischen, Antrieb der Positioniereinheit in die gespannte Anlage betätigbar ist, wobei eine insbesondere hemmende oder selbsthemmende Einrichtung vorgesehen ist, über die der erste Positionierabschnitt vom Antrieb unbetätigt in die gespannte Anlage abgestützt ist. Offenbart ist zudem ein Transfersystem mit einer derartigen Positioniereinheit.

### Bezugszeichenliste

- 1: Transfersystem
- 2: Streckenführung
- 4: Führungsschiene
- 6: Fördermittel
- 8: lineare Streckenabschnitt
- 10: gekrümmter Streckenabschnitt
- 12: Werkstückträger
- 14: Bedienpersonal
- 16: Station
- 18; 118: Positioniereinheit
- 20: Brücke
- 22, 24: Backen
- 26; 126: Antrieb
- 28: erster Positionierabschnitt
- 30: zweiter Positionierabschnitt
- 31: Zentrierelement
- 32: Stirnseite
- 33: Randseite
- 34: Positioniernut
- 36: Schraubverbindung
- 38; 138: Trag- und Gehäusestruktur
- 40: Riementrieb
- 42: Getriebewelle
- 44: Kurvenscheibe
- 46: Umfang
- 47; 147: Spanneinrichtung
- 48: Gleitstück
- 50: Stirnseite
- 52: Druckfeder
- 54, 56: Tellerhülse
- 55: Spannschraube
- 58: Federkopf
- 60; 160: Hebel
- 62: T-Mittelbalken
- 64: Querschenkel
- 66: Zentrierstift
- 67: Langloch
- 68: Querschenkel
- 70: Gleitfläche
- 72: Rückstellfeder
- 74: Führung
- 76: Gleithülse
- 78: Zentrierabschnitt
- 80: Zentrieraufnahme
- 82: Aufnahme
- 84: Stößel
- 86: Knie
- 88,90: Schenkel
- 92: Endabschnitt
- 96: Anschlagschraube
- 98, 99: Rolle
- 100: Aussparung
- 102: Aufnahme
- 104: Schraube
- 106: Abdeckblech
- 108: Durchgangsbohrung
- 110: Führungsstange
- 112: freier Endabschnitt
- 114: Kugelbuchse
- 116: Zentrierfeder
- 125: Schwenklager
- 144: Kniehebel
- 149: Federlängsachse
- r: Radius Kurvenscheibe
- R: maximaler Radius Kurvenscheibe

## Patentansprüche

1. Positioniereinheit zum Positionieren eines Trägers (12) an oder in einem Transfersystem (1), mit Positionierabschnitten (28, 30, 31; 128, 30, 31), mit denen der Träger (12) zum Positionieren in gespannte Anlage bringbar ist, wobei ein erster (28; 128) der Positionierabschnitte von einem, insbesondere elektrischen, Antrieb (26; 126) der Positioniereinheit (18; 118) in die gespannte Anlage betätigbar ist, **gekennzeichnet durch** eine Einrichtung (44, 46, R; 144, 96), über die der erste Positionierabschnitt (28; 128) vom Antrieb (26; 126) unbetätigt in die gespannte Anlage abgestützt ist.

2. Positioniereinheit nach Anspruch 1 mit einem Getriebe (44; 144), über das der erste Positionierabschnitt (28; 128) mit dem Antrieb weg- und/oder kraftgekoppelt ist.

3. Positioniereinheit nach Anspruch 2, wobei eine Übersetzung des Getriebes (44; 144) wegabhängig ist.

4. Positioniereinheit nach Anspruch 2 oder 3, wobei eine Wegübersetzung des Getriebes (44; 144) in der gespannten Anlage null ist, und/oder wobei eine Wegübersetzung des Getriebes (44; 144) außerhalb der gespannten Anlage größer null ist, und/oder wobei eine Wegübersetzung des Getriebes (44; 144) in einer zur gespannten Anlage distalen Ausgangslage des ersten Positionierabschnitts (28; 128) am größten ist.

5. Positioniereinheit nach einem der Ansprüche 2 bis 4, wobei das Getriebe wenigstens einen Hebel (60; 144) hat, über den ein antriebsseitiger Weg in einen mittelbaren oder unmittelbaren Betätigungsweg des ersten Positionierabschnitts (28; 128) umgelenkt oder übersetzt ist.

6. Positioniereinheit nach einem der Ansprüche 2 bis 5, wobei das Getriebe einen Kniehebel (144) hat, dessen Knie (86) mit dem Antrieb (126) und dessen einer Schenkel (88) mit dem ersten Positionierabschnitt (128) weggekoppelt ist.

7. Positioniereinheit nach Anspruch 6, wobei die Einrichtung einen festen oder einstellbaren Anschlag (96) hat, an den das Knie (86) in einer Überstreckung des Knies (86) anschlägt.

8. Positioniereinheit nach einem der Ansprüche 2 bis 7, wobei das Getriebe wenigstens eine Kurvenscheibe (44) hat, über die ein antriebsseitiger Weg in einen mittelbaren oder unmittelbaren Betätigungsweg umgelenkt oder übersetzt ist.

9. Positioniereinheit nach Anspruch 8, wobei der erste Positionierabschnitt (28) mittelbar oder unmittelbar an einem Umfang, Rand oder einer Kurve der Kurvenscheibe (44) abgestützt ist.

10. Positioniereinheit nach Anspruch 9, wobei die Einrichtung von einem Umfangsabschnitt, Randabschnitt oder Kurvenabschnitt gebildet ist, dessen Radius (R) konstant ist.

11. Positioniereinheit nach Anspruch 9 oder 10 mit einem anderen Umfangsabschnitt, Randabschnitt oder Kurvenabschnitt, dessen Radius (r) ein Minimum aufweist, an dem der erste Positionierabschnitt (28) in einer zur gespannten Anlage distalen Ausgangslage mittelbar oder unmittelbar abgestützt ist.

12. Positioniereinheit nach einem der vorhergehenden Ansprüche mit einer Spanneinrichtung (47, 147), von der der erste Positionierabschnitt (28; 128) in die gespannte Anlage spannbar oder gespannt ist.

13. Positioniereinheit nach Anspruch 12, wobei die Spanneinrichtung (47; 147) entlang eines Betätigungsweges des ersten Positionierabschnitts (28; 128), ausgehend von einer Anlage des ersten Positionierabschnitts (28; 128) am Träger (12) bis hin zur gespannten Anlage, mit dem Antrieb (126) kraftgekoppelt ist und ansonsten nicht.

14. Positioniereinheit zumindest nach Anspruch 6 und 13, wobei ein anderer, mit dem Knie (86) verbundener Schenkel (90) des Kniehebels (144) mit der Spanneinrichtung (147) entlang des Betätigungsweges kraftgekoppelt ist und ansonsten nicht.

15. Transfersystem mit einer Streckenführung (2) und einem daran führbaren oder geführten Träger (12), sowie mit einer an der Streckenführung (2) angeordneten Positioniereinheit (18; 118), die gemäß wenigstens einem der vorhergehenden Ansprüche ausgestaltet ist.
